**Europäisches Patentamt**

**(19) European Patent Office**

**Office européen des brevets**

(11) Publication number : **0 471 681 B1**

# (12) EUROPEAN PATENT SPECIFICATION

(45) Date of publication of patent specification :
**02.11.95 Bulletin 95/44**

(51) Int. Cl.⁶ : **G06F 13/10**

(21) Application number : **90905783.8**

(22) Date of filing : **13.03.90**

(86) International application number :
**PCT/US90/01542**

(87) International publication number :
**WO 90/13870 15.11.90 Gazette 90/26**

(54) **REAL-TIME ADJUSTABLE-TRANSFORM DEVICE DRIVER FOR PHYSICAL DEVICES.**

(30) Priority : **08.05.89 US 348636**

(43) Date of publication of application :
**26.02.92 Bulletin 92/09**

(45) Publication of the grant of the patent :
**02.11.95 Bulletin 95/44**

(84) Designated Contracting States :
**BE DE FR GB NL**

(56) References cited :
**EP-A- 0 188 059**

(73) Proprietor : **WANG LABORATORIES, INC.**
**One Industrial Avenue, M/S 014-B7D**
**Lowell, MA 01851 (US)**

(72) Inventor : **BARRETT, David, M.**
**45 Beverlee Road**
**Tyngsboro, MA 01879 (US)**
Inventor : **KNOWLTON, Kenneth, C.**
**51 Pond View Drive**
**Merrimack, NH 03054 (US)**

(74) Representative : **Behrens, Dieter, Dr.-Ing. et al**
**Wuesthoff & Wuesthoff**
**Patent- und Rechtsanwälte**
**Schweigerstrasse 2**
**D-81541 München (DE)**

**Description**

BACKGROUND OF THE INVENTION

The present invention relates to computers, and more particularly to device drivers which provide interface services between a computer and its external devices.

Conventional microprocessor-based machines known as personal computers (PC), typically include external devices such as a cathode ray tube (CRT) display, keyboard, tablet, mouse and a printer for generating or receiving various data which are passed into or out of the PC. In the case where signals are generated by a user manipulating one or more of the external devices, such signals represent data that must be changed into a form suitable for an application program which is operating in the computer and which needs to receive that data. Conversely, any data produced by the application program must also be changed into suitable form before such data can be used by one of the external devices.

Usually containing many lines of code, application programs typically include device drivers which are relatively small programs for controlling and interfacing with external devices. Device drivers provide data structuring ability so that the application program and the external devices can communicate with one another. There is one device driver for each external device which will have access to or be accessed by the application program. This arrangement thus permits great flexibility to accommodate any differences between one particular external device and another. For example, coordinate pointing devices such as a mouse, joystick and a tablet can each be used so long as the three respective device drivers can be loaded into the application program. Moreover, devices of the same type but which have different operating characteristics, can each be accommodated.

With the rise in popularity of computer applications which require graphical inputs, the conventional digitizing tablet is often used as an external device. As can be appreciated, there are now many tablet devices available which has resulted in a correspondingly large number of tablet device drivers to accommodate the variety of commercial offerings and graphical input capabilities.

Various systems related to computer I/O operations are known which involve mechanism to convert or transform input signals into signals understandable by a processor. Croxon (U.S. patent 3,800,290) discloses a data handling apparatus comprising data processing means connected to I/O means to enable a predetermined set of operations on the received input data. Fitzgerald et al. (U.S. patent .4,058,849) discloses a system for converting a rough sketch to a finished drawing. The system converts positional data entries representing the coordinates of definitive points on the roughly sketched object to a set of final delineation arranged in an order corresponding to a predefined pointing sequence. Peltz et al. (U.S. patent 4,716,542) discloses a system for inputting data to a single port of a host computer in parallel from a terminal keyboard and a graphic data digitizer. The system comprises an adapter circuit having a microprocessor which controls switching and is programmed so that the digitizer can mimic the function of the keyboard.

These patents, however, disclose systems having fixed interpretive capabilities designed to transform input data from a single external source. These patents do not involve a system having a device driver code which controls interactive exchange and transformation of data between a variety of user driven external devices and the application program operating on a computer memory.

A problem has arisen if additional data processing is desired for inputs which may contain unwanted noise or if some special data handling is needed for an individual user. For example, a handicapped user may have trouble creating smooth straight or curved lines on a tablet. Since application programs contain relatively large amounts of code, changes may be difficult and thus costly to implement. Although device drivers contain relatively small amounts of code, each of the proliferation must be rewritten to accommodate the special changes. Again, making changes require much effort and attendant cost.

SUMMARY OF THE INVENTION

The above-mentioned problems and disadvantages of the prior art arrangements are overcome by the provision of a new and improved device driver made in accordance with the teachings of the present invention as set forth in claims 1 and 13. In a preferred embodiment, the present invention is capable of incorporating a transform which a user selects from a prescribed group of transforms. Each of the transforms have data-manipulating abilities beyond the capabilities of prior art device drivers which translate the data structure of external device signals so that they can be recognized by the application program coupled to receive those signals. This arrangement also permits the user to make coarse and fine adjustments to the external device signals. The coarse adjustment is the result of the user making a specific transform selection from the group. The fine adjustment is the result of the user defining the value of one or more variables which control the behavior of the selected transform itself. As further explanation, if the selected transform is a noise filter, the transform itself determines what type of noise is removed while a variable in that transform can be used to control how much noise is to be removed.

When the device driver of the present invention is first loaded for use with an application program, a command line parameter is preferably supplied enabling the user to make a selection of which transform from the group is to be incorporated. Other command line parameters are available for specifying the initial settings of any variable used within the selected transform.

The present invention provides services to both the application and to the transforms. The application services include enabling and disabling device driver output, programming the report rate of the tablet, reinitializing the hardware, and defining the value of the transform variable as desired by the user. Some of the transform services include the provision of an interface for passing data from the transform to the application, provision of an error handling routine and provision of an end-of-interrupt routine.

In a working embodiment of the present invention, four data-transforming algorithms have been implemented for selection by the user. One is transparent, two are data filtering, and the fourth is data enhancing. The transparent algorithm enables the present invention to operate as a prior art device driver so that external devices can communicate to the application program. One of the two filtering algorithms acts for making the application program less sensitive to certain inputs representing motions of the external device. The other data filtering algorithm and the data enhancing algorithm are both useful of making curved motions of the external device look relatively smoother.

As a result, the present invention permits a handicapped user to draw straight and curved lines on a tablet sued in connection with a graphical application program.

BRIEF DESCRIPTION OF THE DRAWINGS

The various features of the present invention may be more fully understood from the following description when read together with the accompanying drawings in which:

Figure 1 depicts a memory map of a device driver made in accordance with the teachings of the present invention;

Figure 2 shows the general structure of a data-transforming algorithm used in the present invention; and

Figure 3 presents a slider used for changing the value of a transform variable.

DESCRIPTION OF THE PREFERRED EMBODIMENTS

It should be understood that an actual working embodiment of a device driver made in accordance with the teachings of the present invention has been implemented on a PC which is compatible with an IBM PC-AT model personal computer. One of the preferred external devices is a conventional digitizing tablet, such as but not limited to the MM1201, MM 961 and CR1212 tablets made by Summagraphic, which uses the RS-232 serial interface port of a PC. The device driver code was first written using 80X86 Assembler Code and is included as Appendices A and B, which are included in this patent specification. For ease of presentation and understanding, the preferred embodiment of the present invention will be described with respect to the working embodiment. However, it is understood that the present invention is not to be limited to the teachings of the working embodiment.

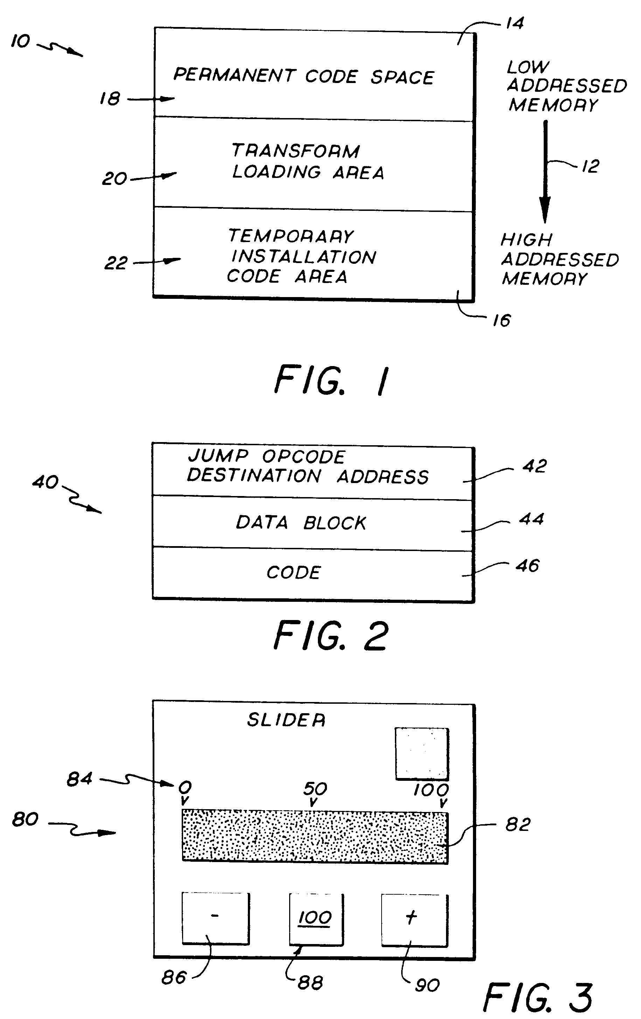

Depicted in Figure 1 is a memory map of one embodiment of a device driver 10 made in accordance with the teachings of the present invention. An arrow 12 shows the direction of increasing memory addresses. The low addressed memory is at address 14 and the high addressed memory is at address 16. A permanent code space 18 contains the code used by the device driver 10 during system execution. In the code space 18 are instructions such as the interrupt service routine and the device driver enabling and disabling procedures.

A transform loading area 20 is a section of empty memory located within the device driver 10. Starting with the lowest available memory address, a user selected data-transforming algorithm, which is known as the transform, is read into this area. The size of the area is initially set to be at least equal to the size of the largest expected transform.

The device driver 10 of the present invention preferably contains four data-transforming algorithms. Two are filtering algorithms that remove unwanted noise which may be present in the data generated by either the tablet or human operator. The other two algorithms provided data enhancement. These four algorithms will be described in more detail in a later portion of the this discussion.

When the device driver 10 is being loaded, a user (computer operator) makes a selection of a command line parameter that specifies which data-transforming algorithm (transform) is to be used. This parameter is a text string that contains the file and path name of the file containing the chosen algorithm. Other command line parameters are available for specifying initial setting of any other variable if such is needed by the transform.

The last section of the device driver is a temporary installation code area 22. The code in this area initializes the data structures used by the device driver 10, initializes the hardware managed by the device driver, loads the transform into the transform loading area 20, takes over the necessary interrupt vectors, and performs error checking on all device drive parameters supplied by the user.

After being loaded, the first action taken by the device driver is to initialize itself and the hardware it manages. Thus, it programs the serial port, redirects the serial port interrupt vector to point to its interrupt handler routine, and loads the user selected transform. The transform is loaded by reading an executable binary image from the file specified on the command line. The image is read into the blank transform loading area 20 located within the program code of the device driver 10.

After the initialization has been successfully completed, the code in the area 22 then proceeds to return to the operating system any memory that is not needed by the device driver 10. The memory that is returned starts immediately after the transform and includes any unused memory in both the transform loading area 20 and the temporary installation code area 22.

As previously mentioned, the present invention preferably contains four data-transforming algorithms which are each located within its own file. In the working embodiment of the present invention, the files are recorded on a hard disk in an area separated from the device driver code. The selected file is retrieved as needed. This arrangement also allows easy distribution of any subsequently developed transforms since new device drive code is not required every time a new transformed is created.

Depicted in Figure 2 is a diagram showing the general structure of a transform 40 that is used by the device driver of Figure 1. Having three major components, the transform 40 is divided into a gateway 42, a data block 44 and a code 46. Since the separately stored algorithms are dynamically relocatable upon user selection, the address references within each algorithm are with respect to the address where that algorithm begins. The gateway 42 is provided in a fixed location which is communicated to the device driver 10 so that only the selected algorithm is executed and not all four algorithms. The gateway arrangement permits each algorithm to have multiple entry points.

In the aforementioned working embodiment of the present invention, the gateway 42 is the first three bytes of each algorithm and is actually a jump instruction. The first byte is a jump opcode and the other two form the destination address relative to the beginning of that algorithm. The device driver transfers control to the algorithm by jumping to this jump instruction. Since the addresses within the gateway 42 are only associated with the selected algorithm, the transform 40 contains information for controlling which entry point is to be accessed. The information to be loaded in the gateway 42 is determined when the user makes a selection of the command line parameter.

The data block 44 contains information for obtaining the length of the chosen algorithm, the upper and lower limits for the value of any variable used in that algorithm, and a variable space for the magnitude of the variable itself. In addition, there is space for the addresses of the device driver routines that handle errors and pass data to the application. There is also space for the addresses of two buffers. The first buffer is for raw data from the external device and the second is for data that is transformed in accordance with the selected algorithm and is to be sent to the application.

The first word of the data block 44 is the length of the entire algorithm in bytes. With reference back to Figure 1, this information is used by the installation code in the code area 22 for determining the memory addresses of unused memory locations after the selected algorithm is loaded into the transform loading area 20. In the working embodiment, this first word is 16 bits long so that no more 65535 bytes is available for the longest data-transforming algorithm.

The next two words define the range of values that the transform variable may assume. The lower bound is specified first, followed by the upper bound. The transform supplies these values so that the device driver can validate the transform variable specified by the user. The transform variable is validated when the device driver is loaded and a new value of the variable is specified through the device driver application services.

In order to permit relatively easy development of new transforms, the device driver provides three transform services. The first passes date to the application. The second is an error handling routine that reinitializes the hardware. The third service simply provides the transform with an end-of-interrupt routine. All of these services return control to the device driver and cause the execution of the interrupt handler to be terminated. The three words that follow the data relating to the bounds of the transform variable are the addresses of these services relative to the start address of the device driver. The device driver initializes these words when it loads the transform.

A pair of buffers are provided so that data can be passed to and from the transform. The data block at the beginning of each transform contains a pair of words that specify the addresses of the buffers. The first buffer is the input buffer. The device driver receives data from the hardware and places it into this buffer before jumping to the transform. The second buffer is the output buffer where the transform places data that is ready to be sent to the application.

Also included in the data block is storage space for the transform variable. When the device driver is loade, it fills this storage space with the value of this variable specified by the user. The user can change this value dynamically after the device driver is loaded through a service provided by the device driver.

Any environmental information needed by the transform is also passed to it through the data block. This arrangement is useful because there are some conditions, such as system idle periods, where it is undesirable for the transform to add points to the data stream. A variable is used by the device driver to notify the transform when these conditions exist.

The transform code 46 is located after the data block 44. This is the code that implements the data filtering or enhancing features of the present invention. The code 46 is actually in the form of a finite state machine (FSM). Giving the transform the structure of an FSM increases the amount of processor bandwidth available to the computer. As further explanation, the data from an external device such as a digitizing tablet is in the form of a five byte packet. These bytes enter the system through the serial ports, each one causing an interrupt. By using a small amount of processor bandwidth each time a byte arrives, the transform receives more bandwidth than it would otherwise receive if it was not called until the entire packet was available. Furthermore, since the bandwidth used by the transform is distributed over time, the computer system is less affected by its loss.

Thus when an interrupt occurs indicating that a byte of tablet data has arrived, the device driver takes the data and puts it into the input buffer. The device driver then enters one of the states of the transform by jumping through the transform gateway. The jump address of the gateway determines which state of the transform is entered. The entered state then takes the data from the input buffer, performs its function and stores any partial results, and updates the gateway jump address to be that of the next state to be executed. Control is then returned to the device driver through one of the three provided transform services.

In the actual working embodiment of the present invention, four transforms have been implemented. As will be described below, one is transparent, two are data filtering, and the last is data enhancing. The transparent transform simply operates to collect data until an entire packet has been accumulated. The device driver is then directed to deliver the packet to the application. With this transform being used in to the present invention, the device driver operates in the same manner as a prior art device driver.

The second transform, called the four-point averaging transform, collects coordinate pairs (each complete data packet being defined as a pair of coordinates representing position information)) from the tablet and averages them together to produce a single coordinate pair which is subsequently transmitted to the application. This transform operates to smooth the data (especially data representing curve information) and acts as a noise filter. Since only one coordinate pair is used by the application for every four pairs generated by the tablet, this transform also reduces the amount of data used by the application.

Known as the X-percent of the Way There Algorithm, the third transform operates to calculate the distance between two coordinate pairs generated by the tablet. It then determines a replacement pair of coordinates which are at a distance that is X percent of the calculated distance. The replacement pair of coordinates are later transmitted to the application. Unlike the previously described transform , this one is not data reducing since a coordinate pair is produced for every pair generated by the tablet. The transform variable is the X-percent variable.

In the working embodiment, a separate program (first written in the C program language) is evoked by the user for setting the actual value of this transform variable. Presented in Figure 3 is a slider 80 having a horizontal bar 82 which shows the present value of the transform variable v (which is the X-percent variable of the transform) to be 100, representing 100 percent. The scale 84 above the horizontal bar 82 is shown with a range of values between zero percent and 100 percent. The value of transform variable v is also displayed in region 88. By locating a CRT display cursor (under the control of a tablet) within minus region 86 and causing an activation by a user action recognized by the separate program, the horizontal bar 82 will move left thereby decreasing in value. Then by deactivating minus region 86 via an appropriate action by the user the movement of the bar 82 will cease and stop at a value. The value of the transform variable v is thus fixed at the new value which is displayed in region 88. Similarly, by activating plus region 90, the horizontal bar 82 will move towards the right and the value of the transform variable v shown in region 88 increases until a deactivation action is recognized by the separate program. In the working embodiment, the range of zero to 100 percent is actually corresponds to a range from one to 99 percent respectively. This arrangement avoids zero as a value for the X-percent which would result in no data being sent to the application. This transform is particularly useful with the invention recited in the United States application having serial number 108,176, filed on October 14, 1987, and assigned to the same Assignee as the present invention.

The third transform, called the Pseudo B-Spline transform, operates to produce three coordinate pairs for use by the application. The three pairs are derived from each coordinate pair generated by the tablet. This algorithm keeps in a buffer a historical record of not only the last three coordinate points, designated as A, B and C, produced by the tablet, but also the next coordinate point, designated as D. It should be explained that a coordinate point is a pair of values which represent a position in a suitable planar coordinate system, such as the x-y coordinates of a Cartesian plane. When the new point D is received additional points B' and B'' are calculated in accordance with the respective equations given below:

$$B' = [- 2A + 17B + 7C - D]/21$$
$$B'' = [- A = 7B = 17C - 2D]/21$$

Points B, B' and B'' are sent to the application and the buffer containing points A, B and C is rolled backwards so that point B becomes A, point C becomes point B and point D becomes C. The purpose of this algorithm is to make more smooth the curve which is apparently produced if all originally generated points were joined with straight lines. This transform is based on well known and conventional algorithms called B-Spline techniques. However, it is clear that any other desired routine can be implemented as desired for generating extra points.

While the invention has been described with reference to specific embodiments, it will be apparent that improvements and modifications may be made within the purview of the invention without departing from the spirit and scope thereof as defined in the appended claims. For example, even though a RS-232 serial port is used as the interface with the external device, a parallel or other proprietary interface can be utilized. Moreover, the tablet pointing device can also be replaced by a touch screen CRT.

In the aforementioned working embodiment, the device driver must be specified when the driver is first loaded for use with a particular application. A new device driver service can be added that would allow users to dynamically change transforms in a manner similar to the way the transform variable is changed in the X-percent of the Way transform.

**Claims**

1. A data processing system, comprising:
   a) a memory for storing instructions and data including an application program, and
   b) a processor responsive to the instructions and data stored in memory for executing the application program and for creating, storing in the memory, and executing, a device driver code module for coupling data signals from an external device to the application program, the device driver code module comprising:
   a device driver code portion (10) comprising instructions and data used by the processor for receiving data signals, having a first data structure, from the external device and for sending data signals, having a second data structure, to the application program, and
   a transform code portion (40) coupled to the device driver code portion and comprising instructions and data used by the processor for transforming the data signals having the first data structure into the data signals having the second data structure in accordance with a specific transformation procedure,
   wherein the processor selects the transform code portion from a plurality of prescribed transform code portions each corresponding to a specific transformation procedure, and couples the selected transform code portion to the device driver code portion to provide the device driver code module.

2. The data processing system of Claim 1 wherein the processor selects the transform code from a plurality of prescribed transform code portions each corresponding to a specific transformation procedure,
   and the processor loads the selected transform code portion into the transform loading area and couples the transform code portion to the device driver code portion to provide the device driver code module.

3. The data processing system of Claim 1 or 2 wherein the device driver code portion (10) comprises:
   a permanent code space portion (18) comprising instructions used by the processor for executing the device driver, and a transform loading area (20) for receiving the selected prescribed transform code portion.

4. The data processing system of Claim 1, 2 or 3 wherein the device driver code portion (10) further comprises a temporary installation code area (22) comprising instructions used by the processor for initializing the device driver, loading the selected transform code portion into the transform loading area, and initializing the external device.

5. The data processing system as in any of the preceding claims wherein each transform code portion comprises an algorithm code portion (46) comprising instructions for defining a finite state machine used by the processor for executing the transformation procedure prescribed for the selected transform code portion,
   a gateway code portion (42) including instructions and data used by the processor for controlling entry into the finite state machine of the algorithm code portion, and
   a data block portion (44) for storing data containing information used by the processor for executing the selected transform code portion.

6. The data processing system of Claim 5 wherein the data block portion (44) further comprises data indicating the address in memory of a first buffer area for storing the first data structure data signals received from the external device, and data indicating the address in memory of a second buffer area for storing the second data structure data signals generated by the selected transform algorithm operating on the first data structure data signals stored in the first buffer area.

7. The data processing system as in any of the preceding claims wherein at least one of the prescribed transformation procedures is a data filtering type.

8. The data processing system as in any of the preceding claims wherein at least one of the prescribed transformation procedures is an X percent of the way there type of algorithm, and the X percent is a variable having a predetermined magnitude from a range of magnitudes.

9. The data processing system of Claim 8 wherein the predetermined magnitude is selected by a user.

10. The data processing system as in any of the preceding claims wherein at least one of the prescribed transformation procedures is a four point averaging type of algorithm.

11. The data processing system as in any of the preceding claims wherein at least one of the prescribed transformation procedures is a data enhancing type of algorithm which generates at least one new data point in addition to those produced by the external device.

12. The system as recited in Claim 11 wherein the data enhancing type of prescribed transformation procedure is a pseudo B-Spline type of algorithm.

13. A method for processing data, comprising the steps of:
a) storing instructions and data including an application program in a memory, and
b) providing a processor responsive to the instructions and data stored in memory for executing the application program and for creating, storing in the memory, and executing, a device driver code module for coupling data signals from an external device to the application program, creating the device driver code module comprising the steps of:
creating a device driver code portion in memory comprising instructions and data used by the processor for receiving data signals, having a first data structure, from the external device and for sending data signals, having a second data structure, to the application program, and coupling a transform code portion to the device driver code portion, the transform code portion comprising instructions and data used by the processor for transforming the data signals having the first data structure into the data signals having the second data structure in accordance with a specific transformation procedure,

wherein the processor selects the transform code portion is from a plurality of prescribed transform code portions each corresponding to a specific transformation procedure, and couples the selected transform code portion to the device driver code portion to provide the device driver code module.

14. The data processing method of Claim 13 wherein creating the device driver code portion comprises: defining a permanent code space portion comprising instructions used by the processor for executing the device driver, and
defining a transform loading area for receiving the selected prescribed transform code portion.

15. The data processing method of Claim 13 or 14 wherein creating the device driver code portion further comprises:
defining a temporary installation code area comprising instructions used by the processor for initializing the device driver, loading the selected transform code portion into the transform loading area, and initializing the external device.

16. The data processing method of Claim 13, 14 or 15 wherein creating the transform code portion comprises defining an algorithm code portion comprising instructions for defining a finite state machine used by the processor for executing the transformation procedure prescribed for the selected transform code portion,
defining a gateway code portion including instructions and data used by the processor for controlling entry into the finite state machine of the algorithm code portion, and
defining a data block portion for storing data containing information used by the processor for executing the selected transform code portion.

17. The data processing method of Claim 16 wherein creating the data block portion further comprises defining data indicating the address in memory of a first buffer area for storing the first data structure data signals received from the external device, and
defining data indicating the address in memory of a second buffer area for storing the second data structure data signals generated by the selected transform algorithm operating on the first data structure data signals stored in the first buffer area.

18. The data processing method as in any of the preceding claims wherein as least one of the prescribed transformation procedures is a data filtering type.

**19.** The data processing method as in any of the preceding claims wherein at least one of the prescribed transformation procedures is an X percent of the way there type of algorithm, and the X percent is a variable having a predetermined magnitude from a range of magnitudes.

**20.** The data processing method of Claim 19 wherein the predetermined magnitude is selected by a user.

**21.** The data processing method as in any of the preceding claims wherein at least one of the prescribed transformation procedures is a four point averaging type of algorithm.

**22.** The data processing method as in any of the preceding claims wherein at least one of the prescribed transformation procedures is a data enhancing type of algorithm which generates at least one new data point in addition to those produced by the external device.

**23.** The method as recited in Claim 22 wherein the data enhancing type of prescribed transformation procedure is a pseudo B-Spline type of algorithm.

**Patentansprüche**

**1.** Datenverarbeitungssystem, mit
a) einem Speicher zum Speichern von Befehlen und Daten, einschließlich eines Anwenderprogramms,
b) einem auf die im Speicher gespeicherten Befehle und Daten ansprechenden Prozessor zum Ausführen des Anwenderprogramms und zum Erstellen, Speichern im Speicher und Ausführen eines Gerätetreibercode-Moduls zum Koppeln von Datensignalen von einem externen Gerät mit dem Anwenderprogramm, wobei das Gerätetreibercode-Modul umfaßt:
- einen Gerätetreibercode-Teil (10) mit Befehlen und Daten, die vom Prozessor zum Empfangen von Datensignalen einer ersten Datenstruktur vom externen Gerät und zum Senden von Datensignalen einer zweiten Datenstruktur an das Anwenderprogramm benutzt werden, und
- einen Umsetzcode-Teil (40), der mit dem Gerätetreibercode-Teil verbunden ist und Befehle und Daten umfaßt, die vom Prozessor zum Umsetzen der Datensignale der ersten Datenstruktur in die Datensignale der zweiten Datenstruktur entsprechend einer speziellen Umsetzprozedur benutzt werden, wobei der Prozessor den Umsetzcode-Teil aus einer Vielzahl von vorgeschriebenen Umsetzcode-Teilen wählt, die je einer speziellen Umsetzprozedur entsprechen, und den gewählten Umsetzcode-Teil mit dem Gerätetreibercode-Teil koppelt, derart, daß das Gerätetreibercode-Modul erzeugt wird.

**2.** Datenverarbeitungssystem nach Anspruch 1, bei dem der Prozessor den Umsetzcode aus einer Vielzahl von vorgeschriebenen Umsetzcode-Teilen wählt, die je einer speziellen Umsetzprozedur entsprechen, und der Prozessor den gewählten Umsetzcode-Teil in den Umsetzladebereich lädt und den Umsetzcode-Teil mit dem Gerätetreibercode-Teil koppelt, derart, daß das Gerätetreibercode-Modul erzeugt wird.

**3.** Datenverarbeitungssystem nach Anspruch 1 oder 2, bei dem der Gerätetreibercode-Teil (10) umfaßt:
- einen festen Codebereichteil (18) mit Befehlen, die der Prozessor zum Ausführen des Gerätetreibers benutzt, und
- einen Umsetzladebereich (20) zum Empfangen des gewählten vorgeschriebenen Umsetzcode-Teils.

**4.** Datenverarbeitungssystem nach Anspruch 1, 2 oder 3, bei dem der Gerätetreibercode-Teil (10) ferner einen temporären Installationscodebereich (22) aufweist, der Befehle umfaßt, die der Prozessor zum Initialisieren des Gerätetreibers, zum Laden des gewählten Umsetzcode-Teils in den Umsetzladebereich und zum Initialisieren des externen Gerätes benutzt.

**5.** Datenverarbeitungssystem nach einem der vorhergehenden Ansprüche, bei dem jeder Umsetzcode-Teil umfaßt:
- einen Algorithmuscode-Teil (46) mit Befehlen zum Definieren einer endlichen Zustandsmaschine, die der Prozessor zum Ausführen der für den gewählten Umsetzcode-Teil vorgeschriebenen Umsetzprozedur benutzt,
- einen Gatewaycode-Teil (42) mit Befehlen und Daten, die der Prozessor zum Steuern von Eingaben in die endliche Zustandsmaschine des Algorithmuscode-Teils benutzt, und
- einen Datenblock-Teil (44) zum Speichern von Daten, die Informationen enthalten, welche der Prozessor zum Ausführen des gewählten Umsetzcode-Teils benutzt.

6. Datenverarbeitungssystem nach Anspruch 5,
bei dem der Datenblock-Teil (44) ferner umfaßt:

- Daten, welche die Adresse im Speicher eines ersten Pufferbereichs zum Speichern der vom externen Gerät empfangenen Datensignale der ersten Datenstruktur angibt, und

- Daten, welche die Adresse im Speicher eines zweiten Pufferbereichs zum Speichern der Datensignale der zweiten Datenstruktur angibt, die vom gewählten Umsetzalgorithmus erzeugt werden, der die im ersten Pufferbereich gespeicherten Datensignale der ersten Datenstruktur verarbeitet.

7. Datenverarbeitungssystem nach einem der vorhergehenden Ansprüche,
bei dem wenigstens eine der vorgeschriebenen Umsetzprozeduren von einem Datenfilter-Typ ist.

8. Datenverarbeitungssystem nach einem der vorhergehenden Ansprüche,
bei dem wenigstens eine der vorgeschriebenen Umsetzprozeduren ein Algorithmus des Typs "X Percent of the Way There" (X Prozent des Wegs Dahin) ist, und
- die X Prozent eine Variable ist, die eine vorbestimmte Größe aus einem Größenbereich besitzt.

9. Datenverarbeitungssystem nach Anspruch 8,
bei dem die vorbestimmte Größe von einem Benutzer gewählt ist.

10. Datenverarbeitungssystem nach einem der vorhergehenden Ansprüche,
bei dem wenigstens eine der vorgeschriebenen Umsetzprozeduren ein Algorithmus des Typs "Four Point Averaging" (Vierpunktmittelung) ist.

11. Datenverarbeitungssystem nach einem der vorhergehenden Ansprüche,
bei dem wenigstens eine der vorgeschriebenen Umsetzprozeduren ein Algorithmus des Typs "Datenerweiterung" ist, der wenigstens einen neuen Datenpunkt zusätzlich zu den vom externen Gerät erzeugten generiert.

12. System nach Anspruch 11,
bei dem die vorgeschriebene Umsetzprozedur des Typs Datenerweiterung ein Algorithmus des Typs "Pseudo-B-Spline" ist.

13. Verfahren zur Datenverarbeitung,
mit den Arbeitsschritten:

a) Speichern von Befehlen und Daten, einschließlich eines Anwenderprogramms, in einem Speicher, und

b) Bereitstellen eines auf die im Speicher gespeicherten Befehle und Daten ansprechenden Prozessors zum Ausführen des Anwenderprogramms und zum Erstellen, Speichern im Speicher und Ausführen eines Gerätetreibercode-Moduls zum Koppeln von Datensignalen von einem externen Gerät mit dem Anwenderprogramm, wobei die Erstellung des Gerätetreibercode-Moduls die Arbeitsschritte umfaßt:

- Erstellen eines Gerätetreibercode-Teils im Speicher mit Befehlen und Daten, die der Prozessor zum Empfangen von Datensignalen einer ersten Datenstruktur vom externen Gerät und zum Senden von Datensignalen einer zweiten Datenstruktur an das Anwenderprogramm benutzt, und

- Koppeln eines Umsetzcode-Teils mit dem Gerätetreibercode-Teil, wobei der Umsetzcode-Teil Befehle und Daten umfaßt, die der Prozessor zum Umsetzen der Datensignale der ersten Datenstruktur in die Datensignale der zweiten Datenstruktur entsprechend einer speziellen Umsetzprozedur benutzt, wobei der Prozessor den Umsetzcode-Teil aus einer Vielzahl von vorgeschriebenen Umsetzcode-Teilen wählt, die je einer speziellen Umsetzprozedur entsprechen, und den gewählten Umsetzcode-Teil mit dem Gerätetreibercode-Teil koppelt, derart, daß das Gerätetreibercode-Modul erzeugt wird.

14. Verfahren zur Datenverarbeitung nach Anspruch 13,
bei dem die Erstellung des Gerätetreibercode-Moduls umfaßt:

- das Definieren eines festen Codebereichteils mit Befehlen, die der Prozessor zum Ausführen des Gerätetreibers benutzt, und

- das Definieren eines Umsetzladebereichs zum Empfangen des gewählten vorgeschriebenen Umsetzcode-Teils.

15. Verfahren zur Datenverarbeitung nach Anspruch 13 oder 14,
bei dem die Erstellung des Gerätetreibercode-Teils ferner umfaßt:

das Definieren eines temporären Installationscodebereichs mit Befehlen, die der Prozessor zum Initialisieren des Gerätetreibers, zum Laden des gewählten Umsetzcode-Teils in den Umsetzladebereich und zum Initialisieren des externen Gerätes benutzt.

16. Verfahren zur Datenverarbeitung nach Anspruch 13, 14 oder 15,

bei dem das Erstellen des Umsetzcode-Teils umfaßt:

- das Definieren eines Algorithmuscode-Teils mit Befehlen zum Definieren einer endlichen Zustandsmaschine, die der Prozessor zum Ausführen der für den gewählten Umsetzcode-Teil vorgeschriebenen Umsetzprozedur benutzt,
- das Definieren eines Gatewaycode-Teils mit Befehlen und Daten, die der Prozessor zum Steuern von Eingaben in die endliche Zustandsmaschine des Algorithmuscode-Teils benutzt, und
- das Definieren eines Datenblock-Teils zum Speichern von Daten, die Informationen enthalten, welche der Prozessor zum Ausführen des gewählten Umsetzcode-Teils benutzt.

17. Verfahren zur Datenverarbeitung nach Anspruch 16, bei dem das Erstellen des Datenblock-Teils ferner umfaßt:

- das Definieren von Daten, welche die Adresse im Speicher eines ersten Pufferbereiches zum Speichern der vom externen Gerät empfangenen Datensignale der ersten Datenstruktur angeben, und
- das Definieren von Daten, welche die Adresse im Speicher eines zweiten Pufferbereichs zum Speichern der Datensignale der zweiten Datenstruktur angeben, die vom gewählten Umsetzalgorithmus erzeugt wurden, der die im ersten Pufferbereich gespeicherten Datensignale der ersten Datenstruktur verarbeitet.

18. Verfahren zur Datenverarbeitung nach einem der vorhergehenden Ansprüche,

bei dem wenigstens eine der vorgeschriebenen Umsetzprozeduren von einem Datenfilter-Typ ist.

19. Verfahren zur Datenverarbeitung nach einem der vorhergehenden Ansprüche,

bei dem wenigstens eine der vorgeschriebenen Umsetzprozeduren ein Algorithmus des Typs "X Percent of the Way There" (X Prozent des Weges Dahin) ist, und

- die X Prozent eine Variable ist, die eine vorbestimmte Größe aus einem Größenbereich besitzt.

20. Verfahren zur Datenverarbeitung nach Anspruch 19, bei dem die vorbestimmte Größe von einem Anwender gewählt wird.

21. Verfahren zur Datenverarbeitung nach einem der vorhergehenden Ansprüche,

bei dem wenigstens eine der vorgeschriebenen Umsetzprozeduren ein Algorithmus des Typs "Four Point Averaging" (Vierpunktmittelung) ist.

22. Verfahren zur Datenverarbeitung nach einem der vorhergehenden Ansprüche,

bei dem wenigstens eine der vorgeschriebenen Umsetzprozeduren ein Algorithmus des Typs Datenerweiterung ist, der wenigstens einen neuen Datenpunkt zusätzlich zu den vom externen Gerät erzeugten generiert.

23. Verfahren nach Anspruch 22,

bei dem die vorgeschriebene Umsetzprozedur des Typs Datenerweiterung ein Algorithmus des Typs "Pseudo-B-Spline" ist.

## Revendications

1. Système informatique, comprenant:

a) une mémoire pour stocker des instructions et des données comprenant un programme d'application, et

b) un processeur répondant aux instructions et aux données stockées dans la mémoire pour exécuter le programme d'application et pour créer, stocker dans la mémoire, et exécuter un module de programme de gestion de périphérique pour coupler des signaux de données provenant d'un dispositif externe au programme d'application, le module de programme de gestion de périphérique comprenant:

une partie de programme de gestion de périphérique (10) comprenant des instructions et des données utilisées par le processeur pour recevoir des signaux de données, ayant une première structure de données, du dispositif externe et pour envoyer des signaux de données, ayant une deuxième structure de données, au programme d'application, et

une partie de programme de transformation (40) couplée à la partie de programme de gestion de périphérique et comprenant des instructions et des données utilisées par le processeur pour transformer les signaux de données ayant la première structure de données en signaux de données ayant la deuxième structure de données selon une procédure de transformation spécifique, dans lequel le processeur choisit la partie de programme de transformation parmi une pluralité de parties de programme de transformation imposées correspondant chacune à une procédure de transformation spécifique, et couple la partie de programme de transformation choisie à la partie de programme de gestion de périphérique pour former le module de programme de gestion de périphérique.

2. Système informatique selon la revendication 1 dans lequel le processeur choisit le programme de transformation parmi une pluralité de parties de programme de transformation imposées correspondant chacune à une procédure de transformation spécifique,
et le processeur charge la partie de programme de transformation choisie dans la zone de chargement de transformation et couple la partie de programme de transformation à la partie de programme de gestion de périphérique pour former le module de programme de gestion de périphérique.

3. Système informatique selon la revendication 1 ou 2 dans lequel la partie de programme de gestion de périphérique (10) comprend :
une partie d'espace de programme permanent (18) comprenant des instructions utilisées par le processeur pour exécuter le module de gestion de périphérique, et
une zone de chargement de transformation (20) pour recevoir la partie de programme de transformation imposée choisie.

4. Système informatique selon la revendication 1, 2 ou 3 dans lequel la partie de programme de gestion de périphérique (10) comprend de plus une zone de programme d'installation (22) provisoire comprenant des instructions utilisées par le processeur pour initialiser le module de gestion de périphérique, charger la partie de programme de transformation choisie dans la zone de chargement de transformation, et initialiser le dispositif externe.

5. Système informatique selon l'une quelconque des revendications précédentes dans lequel chaque partie de programme de transformation comprend une partie de programme d'algorithme (46) comprenant des instructions pour définir un automate à nombre fini d'états utilisé par le processeur pour exécuter la procédure de transformation imposée pour la partie de programme de transformation choisie,
une partie de programme de communication (42) comprenant des instructions et des données utilisées par le processeur pour commander l'entrée dans l'automate à nombre fini d'états de la partie de programme d'algorithme, et
une partie de bloc de données (44) pour stocker des données contenant l'information utilisée par le processeur pour exécuter la partie de programme de transformation choisie.

6. Système informatique selon la revendication 5 dans lequel la partie de bloc de données (44) comprend de plus des données indiquant l'adresse dans la mémoire d'une première zone de tampon pour stocker les signaux de données de la première structure de données reçus du dispositif externe, et des données indiquant l'adresse dans la mémoire d'une deuxième zone de tampon pour stocker les signaux de données de la deuxième structure de données générés par l'algorithme de transformation choisi opérant sur les signaux de données de la première structure de données stockés dans la première zone de tampon.

7. Système informatique selon l'une quelconque des revendications précédentes dans lequel au moins une des procédures de transformation imposées est du type à filtrage de données.

8. Système informatique selon l'une quelconque des revendications précédentes dans lequel au moins une des procédures de transformation imposées est un type d'algorithme X pour-cent de la distance (X percent of the way there), et X pour-cent est une variable ayant une grandeur prédéterminée dans une plage de grandeurs.

9. Système informatique selon la revendication 8 dans lequel la grandeur prédéterminée est choisie par un utilisateur.

10. Système informatique selon l'une quelconque des revendications précédentes dans lequel au moins une des procédures de transformation imposées est un type d'algorithme de moyennage à quatre points.

11. Système informatique selon l'une quelconque des revendications précédentes dans lequel au moins une des procédures de transformation imposées est un type d'algorithme à enrichissement de données qui génère au moins un nouveau point de données en plus de ceux produits par le dispositif externe.

12. Système selon la revendication 11 dans lequel le type à enrichissement de données de procédure de transformation imposée est un type d'algorithme pseudo B-Spline.

13. Procédé de traitement de données, comprenant les étapes consistant à :
a) stocker des données et des instructions comprenant un programme d'application dans une mémoire, et

b) utiliser un processeur répondant aux instructions et aux données stockées dans la mémoire pour exécuter le programme d'application et pour créer, stocker dans la mémoire, et exécuter un module de programme de gestion de périphérique pour coupler des signaux de données provenant d'un dispositif externe au programme d'application, créer le module de programme de gestion de périphérique par les étapes consistant à :

créer une partie de programme de gestion de périphérique dans la mémoire comprenant les instructions et les données utilisées par le processeur pour recevoir des signaux de données, ayant une première structure de données, du dispositif externe et pour envoyer des signaux de données, ayant une deuxième structure de données, au programme d'application, et coupler une partie de programme de transformation à la partie de programme de gestion de périphérique, la partie de programme de transformation comprenant des instructions et des données utilisées par le processeur pour transformer les signaux de données ayant la première structure de données en signaux de données ayant la deuxième structure de données selon une procédure de transformation spécifique,

dans lequel le processeur choisit la partie de programme de transformation parmi une pluralité de parties de programme de transformation imposées correspondant chacune à une procédure de transformation spécifique, et couple la partie de programme de transformation choisie à la partie de programme de gestion de périphérique pour former le module de programme de gestion de périphérique.

14. Procédé de traitement de données selon la revendication 13 dans lequel la création de la partie de programme de gestion de périphérique comprend les étapes consistant à : définir une partie d'espace de programme permanent comprenant des instructions utilisées par le processeur pour exécuter le module de gestion de périphérique, et

définir une zone de chargement de transformation pour recevoir la partie de programme de transformation imposée choisie.

15. Procédé de traitement de données selon la revendication 13 ou 14 dans lequel la création de la partie de programme de gestion de périphérique comprend de plus les étapes consistant à : définir une zone de programme d'installation temporaire comprenant des instructions utilisées par le processeur pour initialiser le module de gestion de périphérique, charger la partie de programme de transformation choisie dans la zone de chargement de transformation, et initialiser le dispositif externe.

16. Procédé de traitement de données selon la revendication 13, 14 ou 15 dans lequel la création de la partie de programme de transformation comprend les étapes consistant à définir une partie de programme d'algorithme comprenant des instructions pour définir un automate à nombre fini d'états utilisé par le processeur pour exécuter la procédure de transformation imposée pour la partie de programme de transformation choisie, définir une partie de programme de communication comprenant des données et des instructions utilisées par le processeur pour commander l'entrée dans l'automate à nombre fini d'états de la partie de programme d'algorithme, et

définir une partie de bloc de données pour stocker des données contenant l'information utilisée par le processeur pour exécuter la partie de programme de transformation choisie.

17. Procédé de traitement de données selon la revendication 16 dans lequel la création de la partie de bloc de données comprend de plus les étapes consistant à

définir des données indiquant l'adresse dans la mémoire d'une première zone de tampon pour stocker les signaux de données de la première structure de données reçus du dispositif externe, et

définir des données indiquant l'adresse dans la mémoire d'une deuxième zone de tampon pour stocker les signaux de données de la deuxième structure de données générés par l'algorithme de transformation choisi opérant sur les signaux de données de la première structure de données stockés dans la première zone de tampon.

18. Procédé de traitement de données selon l'une quelconque des revendications précédentes dans lequel au moins une des procédures de transformation imposées est du type à filtrage de données.

19. Procédé de traitement de données selon l'une quelconque des revendications précédentes dans lequel au moins une des procédures de transformation imposées est un type d'algorithme X pour-cent de la distance (X percent of the way there), et X pour-cent est une variable ayant une grandeur prédéterminée dans une plage de grandeurs.

20. Procédé de traitement de données selon la revendication 19 dans lequel la grandeur prédéterminée est choisie par un utilisateur.

**21.** Procédé de traitement de données selon l'une quelconque des revendications précédentes dans lequel au moins une des procédures de transformation imposées est un type d'algorithme de moyennage à quatre points.

**22.** Procédé de traitement de données selon l'une quelconque des revendications précédentes dans lequel au moins une des procédures de transformation imposées est un type d'algorithme à enrichissement de données qui génère au moins un nouveau point de données en plus de ceux produits par le dispositif externe.

**23.** Procédé selon la revendication 22 dans lequel le type à enrichissement de données de procédure de transformation imposée est un type d'algorithme pseudo B-Spline.

FIG. 1

FIG. 2

FIG. 3